# EUROPEAN PATENT APPLICATION

(11) **EP 3 503 529 A1**
(43) Date of publication of application: **26.06.2019**
(21) Application number: 17209507.7
(22) Date of filing: 21.12.2017
(51) Int. Cl.: H04N 5/232, G06F 3/0488

(54) **METHOD FOR ENHANCED TAKING OF PHOTOS**

(71) Applicant: Vestel Elektronik Sanayi ve Ticaret A.S., 45030 Manisa (TR)
(72) Inventor: DEMIR, Murat, 45030 Manisa (TR); KAHRAMANOGLU, Gürmen, 45030 Manisa (TR)
(74) Representative: Ascherl, Andreas

(57) **Abstract**

The present invention refers to a method for capturing at least one photo or video, in particularly selfies, with a smartphone (4). The present method preferably comprises at least the steps:
activating a camera (6) of the smartphone (4) arranged at the frontside of the smartphone (4), wherein the frontside of the smartphone (4) also comprises a touch display (8),
displaying images captured by the camera (6) with the touch screen (8),
displaying a touch field with the touch screen (8), wherein the touch field defines a triggering area (1) of the touch screen (8) for triggering a photo or video taking step, wherein the photo or video taking step comprises detecting an element, in particularly finger, touching the touch screen (8) in the triggering area (1), characterized in that at least one parameter of the triggering area (1) modifies in dependency of a movement parameter of the smartphone (4), wherein the movement parameter of the smartphone (4) is detected by at least one sensor means, wherein the sensor means is part of the smartphone (4).

## Description

The present invention refers according to claim 1 to a method for capturing at least one photo or video, in particularly selfies, with a smart device, in particularly smart phone and according to claim 13 to a computer program product for executing such a method.

### Background of the invention

When activating the front camera to take a selfie on smartphones, it is necessary to hold the phone in balance and at the desired angle with one hand and to press the photo capture button in the lower middle of the screen. This process becomes increasingly difficult as a result of lifting the phone upwards. For this reason, additional apparatus such as a selfie bar are needed. This suggests a solution to this problem.

The prior art document CN104469001 discloses a mobile phone with a photographing stabilization function and a stabilization method in the photographing process of the mobile phone.

It can be quite difficult to keep the phone in balance and at the desired angle with one hand while taking the selfie, or to press the photo-taking button located at the bottom center of the screen. No solution to this problem was proposed in the patent study X1.

Thus, it is often difficult to click on the touch key in the bottom center of the screen in order to keep the phone in balance during selfie, to capture the correct and desired viewing angle and to take pictures at the same time. Particularly as it is lifted upwards, this process becomes more difficult with the effect of the gravity. It is very difficult to press this button even if there is a photo-taking button beside the phone in most phones. On smart phones, the selfie key is usually below and in the middle of the screen and the position is fixed.

### Object of the invention

It is therefore the object of the invention to provide a method for enhanced taking of photos, in particularly selfies.

### Description of the invention

The before mentioned object is solved by a method for capturing at least one photo or video, in particularly selfies, with a smartphone or smart device according to claim 1. The method preferably comprises at least the steps: Activating a camera of the smartphone arranged at the frontside of the smartphone, wherein the frontside of the smartphone also comprises a touch display, displaying images captured by the camera with the touch screen, displaying a touch field with the screen, wherein the touch field defines a triggering area of the touch screen for triggering a photo or video taking step, wherein the photo or video taking step comprises detecting an element, in particularly finger, touching the screen in the triggering area. Additionally or alternatively at least one parameter of the triggering area modifies or is modified in dependency of a movement parameter of the smartphone, wherein the movement parameter of the smartphone is detected by at least one sensor means, wherein the sensor means is part of the smartphone. This solution is beneficial since the triggering area is adapted respectively modified in dependency of the position and/or orientation of the smartphone. Thus, despite ergonomic problems which occur in specific situations, like holding the smartphone above the head, photos can be taken easily since the triggering are adapts to the position and/or orientation. Therefore, despite the use of selfie bars the present invention provides, a new gravity screen design, allowing the selfie regardless of the angle with the plane perpendicular to the phone, without the need for an additional appearance in the present invention. The term "selfie" describes a photo which shows the person who took the photo.

Further preferred embodiments are subject-matter of the specification parts and/or of the dependent claims.

According to a preferred embodiment of the present invention the sensor means comprises a gyroscope, wherein the gyroscope detects as movement parameter angular velocities or an inclination of the smartphone with respect to the horizontal plane, wherein the parameter of the triggering area modifies or is modified in case the orientation of the smartphone is changed from a first orientation with respect to the horizontal plane into a second orientation with respect to the horizontal plane. Modification is hereby caused by a processor device, in particularly a CPU or a GPU. This embodiment is beneficial since the modified triggering area helps to ease triggering the camera. Thus, the user can take the photo in the moment the user wants to and ergonomic problems are overcome.

The sensor means further comprises according to a further preferred embodiment of the present invention acceleration sensors, in particular inertial sensors. The parameter of the triggering area preferably modifies in case the position of the smartphone is changed from a first position with respect to the horizontal plane into a second position with respect to the horizontal plane. The first position is hereby preferably in front of a user and/or the first orientation hereby preferably defines an upright position, wherein the touch screen defines a plane which is orientated in an angle between 80° and 100°, in particularly 85° to 95° or 90° or essentially 90° and the second position is hereby preferably above the head of the user and/or the second orientation is preferably a parallel position, wherein the plane defined by the touch screen is orientated in an angle between -10° and 10°, in particularly -5° and 5° or 0° or essentially 0°. The acceleration sensors preferably detect accelerations X-/Y-Z-direction and/or around such axes.

Multiple further positions and/or orientations are according to a further preferred embodiment of the present invention defined between the first position and/or orientation and the second position and/or orientation, wherein the at least one parameter of the triggering area is modified in continuous manner. This embodiment is beneficial since the triggering area is preferably modified in dependency to the inclination or inclination speed and/or the acceleration.

Multiple further positions and/or orientations are defined according to a further preferred embodiment of the present invention between the first position and/or orientation and the second position and/or orientation. The at least one parameter of the triggering area is hereby preferably modified in stepwise manner. Thus, the triggering area is present up to one or multiple defined threshold/s in a first configuration and in case one or multiple thresholds are passed the triggering area is modified into a further configuration in case further thresholds are passed or the before passed thresholds are again passed further modifications of the triggering area are caused. The modifications of the triggering area are preferably assigned to specific steps respectively values between thresholds and stored in a data storage means of the device.

The at least one parameter of the triggering area is according to a further preferred embodiment of the present invention its size and/or its brightness and/or its color and/or its shape and/or its content. The displayed images of the captured scene are preferably just partly, in particularly up to 10% or up to 25% or up to 50% or up to 75%, covered or replaced by the triggering area. The shape is preferably modified from a circular shape to a rectangular shape or vice versa. The triggering area has preferably a shape of a column extending from an upper boarder of the screen to a lower boarder of the screen or from a left boarder of the screen to a right boarder of the screen. Additionally or alternatively the triggering area represents a randomly taken photo or a photo taken in dependency of predefined parameters from the actual captured scene. This embodiment is beneficial since one or multiple different parameters can be modified to enhance the accessibility of the triggering area.

The at least one parameter of the triggering area can be defined according to a further preferred embodiment of the present invention by the user, wherein the user registers the at least one parameter for multiple orientations and/or multiple positions, in particular the first orientation and/or first position and the second orientation and/or second position, wherein the registered parameter or parameters is/are stored in data storage memory of the smartphone. This embodiment is beneficial since the triggering area can be adapted to individual features of the user, in particularly the users hand.

The before mentioned object is also solved by a computer program product according to claim 13 for executing a method according to any of the preceding claims.

Further benefits, goals and features of the present invention will be described by the following specification of the attached figures, in which exemplarily components of the invention are illustrated. Components of the devices, units and methods according to the invention, which match at least essentially with respect to their function can be marked with the same reference sign, wherein such components do not have to be marked or described multiple times with respect to said figures. In the following the invention is just exemplarily described with respect to the attached figures.

### BRIEF DESCRIPTION OF THE DRAWING

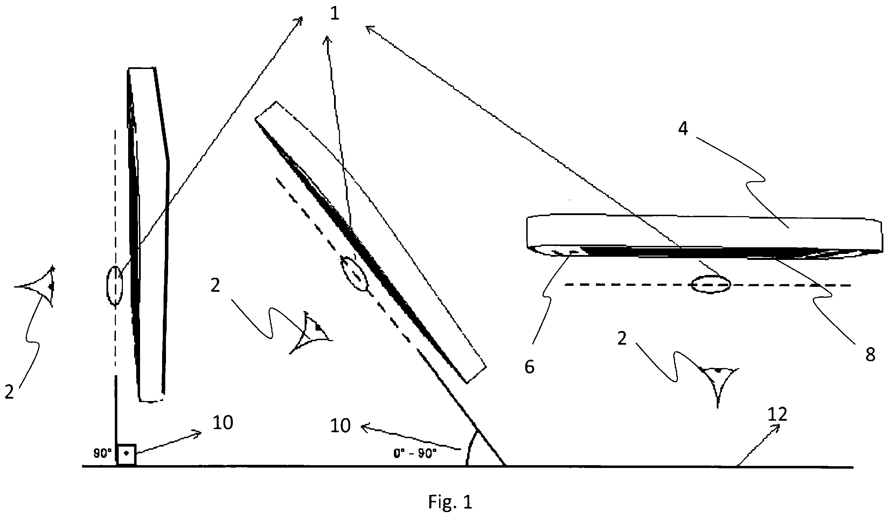

- Fig. 1: shows a smartphone in different positions and orientations and a triggering area which is modified in dependency of the different positions and/or orientations.

### DETAILED DESCRIPTION OF THE DRAWING

In the present invention, a new system is proposed which takes into consideration the angle (automatic adjustment angle) between the phone 4 and the ground plane 12. In this proposed new design, the screen 8 is divided into software sections. The key for taking a picture is preferably repositioned according to personal physical characteristics such as the size of the hand, the length of the fingers, the right or left hand usage habit of the person 2.

Areas outside the capture key continue to be used as the active display. Below (Figure 1) is described a sample scenarios for 90° and <90° angles. However, this scenario can be reconfigured to the user's specification. Thus, a new personal selfie photography system has been created.

When the angle between the phone 4 and the ground plane is 90°, the capture key respectively the triggering area 1 is preferably positioned at the bottom of the touch screen 8. Other parts are active screen 8 respectively are showing the scene the camera captures in that moment. As this angle decreases (< 90°), the capture key respectively the triggering area 1 moves e.g. to the center of the phone screen 8. Other areas are preferably active screens, thus the PCU and/or GPU calculates or determines where the active screen is replaced by the triggering area 1. Relocation of the capture key according to the angle of the phone is performed with the help of gyroscope sensor.

The first position is preferably in front of a user 2 and/or the first orientation defines an upright position, wherein the touch screen defines a plane which is orientated in an angle between 80° and 100°, in particularly 85° to 95° or 90° or essentially 90°. The last position is above the head of the user 2 and/or the second orientation is a parallel position, wherein the plane defined by the touch screen is orientated in an angle between -10° and 10°, in particularly -5° and 5° or 0° or essentially 0°. The illustration in the middle of fig. 1 shows an arrangement of the smartphone 4 with respect to the user 2 between the last (right) position and the first (left) position.

Thus, the present invention refers to a method for capturing at least one photo or video, in particularly selfies, with a smartphone 4. The method preferably comprises the steps: Activating a camera 6 of the smartphone 4 arranged at the frontside of the smartphone 4, wherein the frontside of the smartphone 4 also comprises a touch display 8, displaying images captured by the camera 6 with the touch screen 8, displaying a touch field with the touch screen 8, wherein the touch field defines a triggering area 1 of the touch screen 8 for triggering a photo or video taking step, wherein the photo or video taking step comprises detecting an element, in particularly finger, touching the touch screen 8 in the triggering area 1. At least one parameter of the triggering area 1 is preferably modified or modifies in dependency of a movement parameter of the smartphone 4, wherein the movement parameter of the smartphone 4 is detected by at least one sensor means, wherein the sensor means is part of the smartphone 4.

### Reference numbers

- 1: position of triggering area
- 2: user
- 4: smartphone
- 6: front camera
- 8: display / screen
- 10: orientation
- 12: horizontal plane

## Claims

1. Method for capturing at least one photo or video, in particularly selfie/s, with a smartphone (4),
at least comprising the steps:
activating a camera (6) of the smartphone (4) arranged at the frontside of the smartphone (4),
wherein the frontside of the smartphone (4) also comprises a touch display (8),
displaying images captured by the camera (6) with the touch screen (8),
displaying a touch field with the touch screen (8),
wherein the touch field defines a triggering area (1) of the touch screen (8) for triggering a photo or video taking step,
wherein the photo or video taking step comprises detecting an element, in particularly finger, touching the touch screen (8) in the triggering area (1),
**characterized in that**
at least one parameter of the triggering area (1) is modified in dependency of a movement parameter of the smartphone (4), wherein the movement parameter of the smartphone (4) is detected by at least one sensor means, wherein the sensor means is part of the smartphone (4).

2. Method according to claim 1,
**characterized in that**
the sensor means comprises a gyroscope,
wherein the gyroscope detects as movement parameter angular velocities or an inclination of the smartphone (4) with respect to the horizontal plane (12),
wherein the parameter of the triggering area (1) modifies in case the orientation of the smartphone (4) is changed from a first orientation with respect to the horizontal plane (12) into a second orientation with respect to the horizontal plane (12).

3. Method according to claim 2,
**characterized in that**
the sensor means further comprises acceleration sensors, in particular inertial sensors, wherein the parameter of the triggering area (1) modifies in case the position of the smartphone (4) is changed from a first position with respect to the horizontal plane (12) into a second position with respect to the horizontal plane (12).

4. Method according to claim 2 or claim 3,
**characterized in that**
the first position is in front of a user (2) and/or the first orientation defines an upright position, wherein the touch screen defines a plane which is orientated in an angle between 80° and 100°, in particularly 85° to 95° or 90° or essentially 90°,
and
the second position is above the head of the user (2) and/or the second orientation is a parallel position, wherein the plane defined by the touch screen is orientated in an angle between -10° and 10°, in particularly -5° and 5° or 0° or essentially 0°.

5. Method according to claim 4,
**characterized in that**
multiple further positions and/or orientations are defined between the first position and/or orientation and the second position and/or orientation,
wherein the at least one parameter of the triggering area (1) is modified in continuous manner.

6. Method according to claim 4,
**characterized in that**
multiple further positions and/or orientations are defined between the first position and/or orientation and the second position and/or orientation,
wherein the at least one parameter of the triggering area (1) is modified in stepwise manner.

7. Method according to any of the preceding claims,
**characterized in that**
the at least one parameter of the triggering area (1) is its size and/or its brightness and/or its color and/or its shape and/or its content.

8. Method according to claim 7,
**characterized in that**
the displayed images of the captured scene are just partly, in particularly up to 10% or up to 25% or up to 50% or up to 75%, covered or replaced by the triggering area (1).

9. Method according to claim 7,
**characterized in that**
the shape is modified from a circular shape to a rectangular shape or vice versa.

10. Method according to claim 8 or 9,
**characterized in that**
the triggering area (1) has a shape of a column extending from an upper boarder of the touch screen (8) to a lower boarder of the touch screen (8) or from a left boarder of the touch screen (8) to a right boarder of the touch screen (8).

11. Method according to claim 7,
**characterized in that**
the triggering area (1) represents a randomly taken photo or a photo taken in dependency of predefined parameters from the actual captured scene.

12. Method according to any of the preceding claims,
**characterized in that**
the at least one parameter of the triggering area (1) can be defined by the user (2),
wherein the user (2) registers the at least one parameter for multiple orientations and/or multiple positions, in particular the first orientation and/or first position and the second orientation and/or second position,
wherein the registered parameter or parameters is/are stored in data storage memory of the smartphone (4).

13. Computer program product for executing a method according to any of the preceding claims.
